## Europäisches Patentamt

## European Patent Office

## Office européen des brevets

(11) Publication number: **0 104 797**
**B1**

# (12) EUROPEAN PATENT SPECIFICATION

(45) Date of publication of patent specification: **30.11.88**

(51) Int. Cl.⁴: **B 29 D 30/04, B 60 C 7/12**

(21) Application number: **83305039.6**

(22) Date of filing: **01.09.83**

(54) **Non-pneumatic insert tube for tyres.**

(30) Priority: **02.09.82 US 414068**
**05.01.83 US 455653**
**01.07.83 US 509743**

(43) Date of publication of application:
**04.04.84 Bulletin 84/14**

(45) Publication of the grant of the patent:
**30.11.88 Bulletin 88/48**

(84) Designated Contracting States:
**AT BE CH DE FR GB IT LI LU NL SE**

(56) References cited:
**FR-A- 803 637**
**GB-A- 213 639**
**US-A-4 275 782**
**US-A-4 324 279**

(73) Proprietor: **SOCIETE DE DEVELOPPEMENT TECHNOLOGIQUE S.A.**
**Boite Postale 2205**
**L-2953 Luxembourg (LU)**

(72) Inventor: **Czapar, William A.**
**5578 Stetson Court**
**Anaheim Hills, California 92807 (US)**

(74) Representative: **Rees, David Christopher et al**
**Kilburn & Strode 30 John Street**
**London WC1N 2DD (GB)**

## Description

The present invention relates to a non-pneumatic insert tube adapted for use in a pneumatic tyre as a replacement for pressurised air in accordance with the prior art portion of Claim 1.

One of the major problems associated with pneumatic tyres currently in use is that if the tyre is punctured, the air will escape causing the tyre to deflate. When this occurs, the tyre has no practical utility until the puncture is sealed. This problem is well known to anyone who drives a vehicle and is a particular problem for those who ride bicycles having high-pressure pneumatic tyres.

Many types of tyre inserts have been suggested as a solution for these problems. Examples of patents which disclose the use of tyre inserts include the following: U.S. Patents 862,785; 918,846; 1,052,422; 1,390,467; 1,506,411; 1,819,632; and 4,275,782.

In each of the above patents, a rubber insert is placed within a tyre casing to replace pressurised air. Each of the tubular inserts contains one or more cushioning chambers to simulate a pressurised pneumatic tyre. One of the disadvantages of the prior art inserts is that during use the frictional movement of the insert generates heat causing deterioration of the tyre casing's inner walls. Another problem is that there is no convenient means by which these inserts can be constructed to ensure a simulated pressure equivalent to the tyre manufacturer's recommended pressure. In addition, many of the inserts disclosed in the prior art rely on the use of trapped ambient pressure to obtain a cushioning effect. In so doing, the tyre can take on the characteristics of a partially flat or an improperly inflated tyre when the trapped air is released by puncture.

A further problem associated with prior art inserts is their additional weight. For racing bicycle and wheelchair applications, this added weight causes substantial problems in handling and energy expenditure.

In addition to the use of tyre inserts, various other approaches have been suggested to render a tyre puncture resistant. One technique is to add to a tyre casing or inner tube a quick-curing substance which enters a puncture and causes it to self-seal. Another approach is to produce a thicker inner tube. Others have suggested a double walled inner tube. When the outer wall is punctured, the inner wall retains sufficient air to permit the vehicle to be brought to a relatively safe stop. Still another approach is to insert a solid material, such as rubber or steel, within the tyre casing of a pneumatic tyre. If such a tyre is punctured and loses its air, it becomes only partially flat due to the support provided by the hard inner material.

A relatively recent innovation for preventing flat tyres proposes a method for filling a pneumatic tyre with a foamed rubber or plastics material and then curing the material within the tyre. Upon completing the curing operation, the tyre is supported by this material and does not require pressurised air. This technique requires special and costly equipment to adapt to conventional tyres and is not readily available to the average consumer.

While non-pneumatic inserts offer many advantages over the pneumatic tube or tyre and the foamed tube or tyre, several disadvantages are also present. In particular, a large inventory investment is required to service the variety of tyre sizes in use; the stocking of several sizes of insert tubes results in an inefficient use of storage space; many insert designs are difficult to install over the wheel and inside the tyre and are subject to kinking of the insert tube with a resultant weakening at that highly stressed location; and, the cross-section of the insert tube also has a tendency to become excessively oval when formed into a circle thus providing ride characteristics different to those of a round cross-section.

One further problem associated with non-pneumatic tube inserts relates to the extrusion and joining of the tube ends. First, the material selected for the tube must have a very high yield point and exhibit almost no creep under stress. The very characteristics which permit satisfactory performance as an innertube replacement make extrusion into a circular configuration for insertion into a tyre almost impossible. The ratio of the wall thickness to the tube diameter must be maintained above a certain minimum in order to prevent kinking when the straight tube (as extruded) is formed into a hoop.

Some prior art discloses a non-pneumatic tube which requires to be formed into a circle and then its ends are welded together to make a continuous hoop. The weld can create a non-homogeneity in the structure resulting in a bump every revolution. Also, if the welded tube is not precisely correct in its circumference it will not stay securely mounted on the wheel inside the tyre.

In summary, a non-pneumatic insert tube replacement. for the pneumatic inner tube has in the past posed difficult manufacturing problems, has required very large field inventories to accommodate all sizes, and has offered marginal performance to the user in terms of installation and handling characteristics.

An early French patent, No. 803637 in the name of Michelin & Cie, which concerns an insert tube for a tyre corresponding to the prior art portion of claim 1, shows a pneumatic tyre arrangement for a vehicle wheel including a safety device which allows the vehicle to run when the tyre is deflated. The safety device comprises a hollow thick-walled coil having inner and outer slots, which is located between the pneumatic tube and the wheel rim.

Accordingly, it is an object of the present invention to provide a non-pneumatic tyre insert tube which provides riding qualities and rolling resistance comparable to or better than pneumatic inner tubes, and which can be simply manufactured. It is a further object to provide a design configuration which can be trimmed to the proper circumferential length with ease, which can be installed as easily as a pneumatic tube, and which offers the user a light weight tube which will not become flat if punctured.

A further object of this invention is to reduce the amount and variety of inventory a dealer or manufacturer must stock in order to service all required applications for an inner insert tube, and to eliminate the need for welding the ends of the insert tube together in order to eliminate a hump when installed in the tyre.

According to the invention, there is provided an insert tube for a non-pneumatic tyre comprising an elongate tube defining a bore which extends along the length of the tube, the wall of the tube having a sequence of partial cuts, the sequence of partial cuts being disposed about the outer periphery of the tube when formed into a single coil hoop for insertion into a tyre and with the portion of the tube uncut by the sequence of outer partial cuts being located on the inner periphery of the tube, and with at least a portion of the tube wall disposed between adjacent outer partial cuts in the sequence being continuous about the circumference of the tube characterised by a reinforcing web which is thin relative to the wall thickness of the tube disposed within the bore of the tube and integrally attached to the interior sidewalls of the tube to subdivide the bore into sections.

In a preferred form, the tube comprises a resilient thermoplastic tube which is extruded continuously and partially cut through the cross-section at close intervals during extrusion. The depth and interval of these cuts are selected to meet criteria dictated by specific vehicular use. Preferably, the tube is thin walled and the bore is continuous and extends throughout the entire tube length.

In general, the use of close interval, partial cuts on the outer section of the insert tube when formed into a circle or continuous hoop, inside a tyre, serves to relax the stresses in the crosssection of the tube. These stresses would otherwise tend to make the insert tube elliptical, or partially flattened, when forced into a hoop after being extruded as a straight length.

When a non-pneumatic tube without partial cuts is formed into a hoop, the flattened or elliptical cross-section reduces the load carrying characteristics and increases rolling resistance, since the "footprint" of the tyre is enlarged. The partial cutting of the insert tube relieves these stresses, allows the tube to reassume a circular cross-section, and thereby retains the lowest rolling resistance at a given load and ride harshness.

Further, by partially cutting the tube at depths and spacing determined by material characteristics, cross-sectional diameter, wall thickness and hoop diameter, the designer has two additional independent variables to select from in determining the most cost effective design for the non-pneumatic tyre insert tube.

If the partial cuts are closely spaced, for example, 1/4 inch (6.35 mm) apart, selection of the proper length insert for a given wheel is simplified, because the insert tube can be placed within the tyre and cut off very accurately through one of the partial cuts. Also, inventories can be reduced to one continuous roll of partially cut tubing for all wheel sizes using the same cross-sectional diameter tube.

The use of partial cuts dramatically broadens the material, tube wall thickness and insert tube diameter choices available to the designer. Use of the closely spaced, partial-cut tube design permits the use of a harder thermoplastics material with a thinner wall thickness, thus providing lighter weight and comparable load carrying capacity in designing for different ride and handling characteristics.

Because the partial cuts allow a thin wall tube to be formed into a smaller circle than one without partial cuts, it now becomes possible to use the non-pneumatic tube insert to replace pneumatic inner tubes with a 2" to 3" (51 to 76 mm) cross-sectional diameter, previously found to be impractical to produce in this wheel diameter range without expensive, secondary thermoforming and welding procedures. Also, small hoop diameter wheels, such as the caster wheels of a wheelchair, can now use punctureproof tubes which are simple to install and do not require any welding of the ends, so preventing circular discontinuity.

A further benefit derived from the partial cut design of this invention is found in the natural curvature of the partially cut tubing. As mentioned above, the exact material properties which provide low creep and high load carrying capacity make tubing without partial cuts expensive to form into a circle, or impossible without a second thermoforming step. Also to maintain the circle, the tube ends must be joined, usually by butt welding. The partial cuts allow the use of the tube insert within the tyre casing without joined ends, or with an inexpensive internal sleeve connector, though, of course, if particularly required, a conventional butt welded joint can be used.

For simplified packaging, the partially cut tube can be packaged into a much smaller volume than an uncut tube, because it will naturally coil into a smaller diameter.

Preferably the sequence of partial cuts is continuous throughout the entire length of the tube, however, variation of the invention is characterised by providing the partial cuts only at that portion of tube close to its ends, for example within 5 to 10 times of the cross-sectional diameter from each end, thereby allowing simplified insertion of the tube into the tyre casing, and eliminating the need for butt welding the ends to prevent circular discontinuity. Preferably, the partial cuts are symmetrically disposed relative a first longitudinal line located on the outer periphery of the tube, each of the cuts being transverse to the longitudinal central axis of the tube. Preferably, the tube is generally cylindrical and adjacent partial cuts have a spacing less than the diameter of the tube.

The reinforcing web in the bore of the tube preferably extends the entire length of the tube and may be formed with the tube as a single thermoplastics extrusion. The reinforcing web may divide the interior bore into two sections which may or may not be equal, though preferably, the web is located approximately midway between the inside and outside tube peripheries when coiled into a hoop. The web may be arched or flat, depending upon the ride characteristics desired. Preferably, the cuts extend into the reinforcing web to subdivide the web into separate sections.

In order to provide a relatively cushioned ride, and yet prevent over-stressing the sidewalls of the tube upon deformation, the web may be formed with a predetermined curvature or "arch". This permits the tube to deform at a low load and provide a softer ride. However, when the load causes the tube to assume an elliptical shape due to increased weight or severe impact, the web is placed in tension due to a flattening of the web arch. This load may be predetermined by the designer. For loads which cause a flattened web, the load is shared by the web and the tube sidewalls in such a fashion that the ride becomes very hard, and the tube can withstand heavy shock or static loads without permanent deformation.

In certain applications it is desirable to form the reinforcing web with a flat cross-section at no load (arch eliminated) so that the web is in tension even under light weights. This flat-web design is particularly useful in applications having relatively large diameter insert tubes which would otherwise tend to flatten easily.

Because of the advantages offered by non-pneumatic insert tubes, they have been considered for use in vehicles carrying still heavier loads while subject to both sudden impact forces and intense angularly applied forces. For example, an apparent demand exists for the use of non-pneumatic insert tubes in rickshaws which may carry the full weight of several individuals. In this application, the insert tube diameter is relatively large. A soft ride of necessity dictates an insert tube having a relatively thin sidewall. With these design criteria, the insert tube, including of course the tyre within which it is contained, may distort excessively into a generally inclined elliptical out-of-round shape during sharp cornering manoeuvres at relatively high speeds.

A single flat reinforcing web may not eliminate entirely the out-of-round elliptical distortion created by the foregoing aggravating and demanding conditions.

Accordingly, another object of this invention is to provide a non-pneumatic insert tube for tyres which can be advantageously used in applications and environments in which heavy loads are carried at relatively high speeds while subject to both angularly applied forces and also intermittent impact or shock forces.

Another object of this invention is to broaden the range of use of non-pneumatic insert tubes with respect to the types of vehicles with which they may be used.

Accordingly, a further preferred form of tube is characterised by the inclusion of a reinforcing web structure within the bore of the insert tube having a plurality of generally intersecting cross legs. Thus, there may be two intersecting cross legs forming a generally X-shaped cross section, or a modified X-shaped cross section having a short horizontal centre link. Alternatively, there may be three cross legs intersecting at the centre, or above or below the centre of the tube. In this form, the reinforcing web is located within the bore of the generally circular non-pneumatic insert tube and is integrally attached to the sidewalls of the insert tube at four or six points.

Preferably, each cross leg is formed with a pair of wall attached segments joined together at the locus of intersection of the cross legs. The locus of intersection may be offset from the insert tube centre toward the outer or inner periphery, or may be located approximately on the geometrical centre of the undeformed tube bore.

In another preferred form, the reinforcing web has a plurality of intersecting cross legs extending across the bore of the tube from sidewall to sidewall for the length of the tube and integrally joined to the interior wall of the tube adjacent the partial cuts with the sequence of partial cuts also severing the reinforcing web at least in part. Preferably there are three cross legs, two of the three comprising at least two web segments attached to the interior wall of the tube with the attachment of the one segment being located closer to the inner periphery and with the attachment of the other segment being located closer to the outer periphery. The third cross leg preferably divides the tube bore into two approximately equal semi-circles both of which are generally symmetrically disposed about both the inner and outer periphery. The cross-sectional locus of intersection of the cross legs may be located closer to the inner or outer periphery of the tube.

When the insert tube is subjected to a vertically applied load, the reinforcing cross web is placed in tension with the result that excessive deformation or flattening of the insert tube is prevented. When the insert tube is subjected to angularly applied forces, in the main, one or more legs of the reinforcing web are placed in tension so as to prevent excessive distortion of the insert tube and the resulting generally inclined elliptical shape.

A tube having three intersecting cross legs forming the reinforcing web tends to provide the greatest load handling capabilities of all the various designs.

Certain variations of the invention contemplate the use of curved cross web segments so that the insert tube must be subject to a minimum threshold weight before one or both of the cross legs of the reinforcing web are placed in tension. This mode of operation provides a generally softer ride.

Another variation of the invention contemplates attachment points to the insert tube sidewalls to define a relatively larger span length. This design promotes the reinforcement strength of the insert tubes adjacent the wheel rim, particularly for, insert tubes having a relatively large diameter and a thin wall. This increased span length minimises the tendency in this application for the insert tube to be distorted into an out-of-round, or generally inclined elliptical cross section adjacent the wheel rim in response to angularly applied forces.

In another variation of this invention there is provided a non-uniform wall thickness for the insert tube. In particular, the tube sidewall is made relatively thicker in those vertical areas of the sidewall which carry the highest stress under load, for example at positions adjacent the reinforcing web attachment areas. The effect of this wall nonuniformity is to create a spring-like load-deflection curve approximating that of a variable-rate spring. This results in a soft ride at low loads, and a harsher ride at high loads or impact loads, while preventing the tube from becoming permanently deformed from excessive stress.

According to a prefered form of the invention therefore, a non-pneumatic insert tube for a tyre adapted to be mounted upon a circular rim comprises an elongated tube having a thin wall defining a continuous bore which extends throughout the entire tube length, a sequence of spaced partial cuts severing the thin wall of the tube with the sequence of partial cuts being generally symmetrically centred about the outer periphery of the tube when formed into a single coil hoop for insertion into a tyre and with an uncut portion of the tube being generally symmetrically centered about the inner periphery of the tube which is to be seated adjacent the rim and with the sequence spacing of the partial cuts being less than the diameter of the tube, and a reinforcing web having three intersecting cross legs extending across the bore of the tube from sidewall to sidewall for the length of the tube and integrally joined to the interior wall of the tube adjacent the partial cuts with the sequence of partial cuts also severing the reinforcing web.

The three intersecting cross legs may define substantially equal angular cross-sectional sectors, or alternatively, they may define a first group of equal angular cross-sectional sectors, and a second group of equal angular cross-sectional sectors which are different in size from the first group.

In a further variation, the inner and outer wall thicknesses of the insert tube are different. A preferred form is to make the road contacting wall thicker than the opposite or bottom wall. Two purposes may be achieved with this design. Firstly, a significant saving of material can be achieved. Secondly, the ride characteristics may be tailored to suit the objectives of the designer; that is, the outer wall thickness adjacent the road surface can be made to react to loads at one rate, while the inner wall thickness supported by the tyre beads can be made to react at a different rate.

The various reinforcing web designs may be combined with any of the wall configurations to. provide added load carrying and variable spring ride characteristics.

The invention may be carried into practice in various ways and some embodiment will now be described by way of example with reference to the accompanying drawings in which:-

Figure 1 is a side elevation, partly in section, of a conventional bicycle tyre encasing a tyre insert tube which, although outside the scope of the present invention, nevertheless illustrates many of the features and advantages of the present invention;

Figure 2 is a cross-sectional view of the tyre casing and tyre insert tube taken along line 2-2 of Figure 1;

Figure 3 is a side elevation of a single coil of the tyre insert tube of Figure 1 removed from the casing;

Figure 4 is a view of a random length of the tyre insert tube of Figure 1 which shows the slight curve assumed by the tube due to the partial cuts;

Figure 5 is an end view of the tyre insert tube of Figure 4;

Figure 6 is a cross-sectional view taken along lines 6-6 of Figure 4 showing the depth of a partial cut;

Figure 7 is a side elevation of a variation having partial cuts only at the insert tube end portions;

Figure 8 is a side elevation, partly in section, of a conventional bicycle tyre encasing a tyre insert tube having a reinforcing web in accordance with the invention;

Figure 9 is a cross-sectional view taken along line 9-9 of Figure 8 showing the reinforcing web;

Figure 10 is a cross-sectional view taken along line 10-10 of Figure 8;

Figure 11 is a view taken along line II-II of Figure 8;

Figure 12 is a cross-sectional view of the structure of Figures 8 to 11 with the otherwise arched reinforcing web under tension to prevent further flattening of the tyre;

Figure 13 is a side elevation, partly in section, of a conventional bicycle tyre encasing a modified form of the embodiment of Figures 8 to 12 in which the reinforcing web is flat;

Figure 14 is a cross-sectional view taken along line 14-14 of Figure 13 showing the flat reinforcing web;

Figure 15 is a cross-section view taken along line 15-15 of Figure 13;

Figure 16 is a view taken along line 16-16 of Figure 13;

Figure 17 is a cross-sectional view of another variation of tyre insert tube having enlarged sidewalls with the web omitted for clarity;

Figure 18 shows the structure of Figure 17 applied to an insert tube having an arched web;

Figure 19 is a cross-sectional view showing a modification to the structure of Figure 18 in which the outer wall thickness adjacent the road surface is enlarged and with the web omitted, for clarity;

Figure 20 shows the structure of Figure 19 applied to an insert tube having an arched web;

Figure 21 is a side elevation of a single coil of the tyre insert tube according to the second and third embodiments, removed from the tyre;

Figure 22 is a sectional view of a second embodiment of the invention and having a modified X-shaped reinforcing web with a centre link;

Figure 23 is a sectional view showing the tyre insert tube of the first embodiment distorted into a generally inclined-elliptical shape in response to an excessive angular load;

Figure 24 is a sectional view similar to Figure 22 showing a first variation of the second embodiment responding to an angular side load;

Figure 25 is a sectional view taken along line 25-25 of Figure 21;

Figure 26 is a sectional view taken along line 26-26 of Figure 22;

Figure 27 is a sectional view of a second variation of the second embodiment of the invention;

Figure 28 is a sectional view showing the structure of Figure 27 responding to an angular side load.

Figure 29 is a sectional view of a third variation of the second embodinment of the invention;

Figure 30 is a sectional view which shows the structure of Figure 27 responding to an angular side load;

Figure 31 is a sectional view of a fourth variation of the second embodiment having an extended web attachment and having an X-shaped reinforcing web.

Figure 32 is a sectional view showing the structure of Figure 31 responding to an angular side load;

Figure 33 is a sectional view of a first variation of the third embodiment of the invention having three cross legs intersecting at the centre of the insert tube;

Figure 34 is a sectional view showing the depth of the partial cut of the reinforcing web of Figure 33;

Figure 35 is a sectional view of a second variation of the third embodiment in which the three cross legs intersect above the centre of the insert tube.

Figure 36 is a sectional view showing the depth of the partial cut of the reinforcing web of Figure 35;

Figure 37 is a sectional view of a third variation of the third embodiment of the invention in which the three cross legs intersect below the centre of the insert tube; and

Figure 38 is a sectional view showing the depth of the partial cut of the reinforcing web of Figure 37.

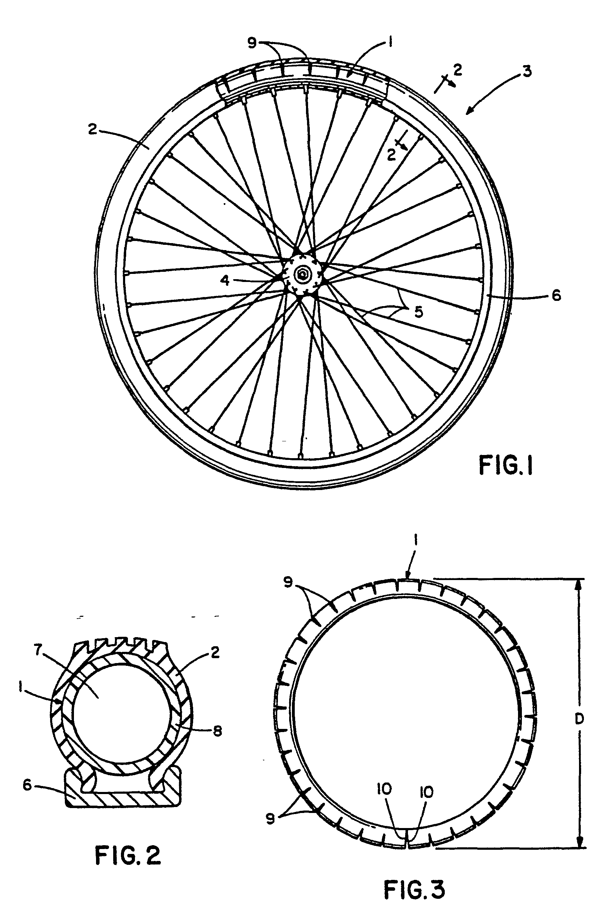

Referring to Figure 1, a tyre insert tube is shown contained within a conventional bicycle tyre 2. The tube is in accordance with the invention in all respects other than by the absence of a reinforcing web within the bore defined by the tube.

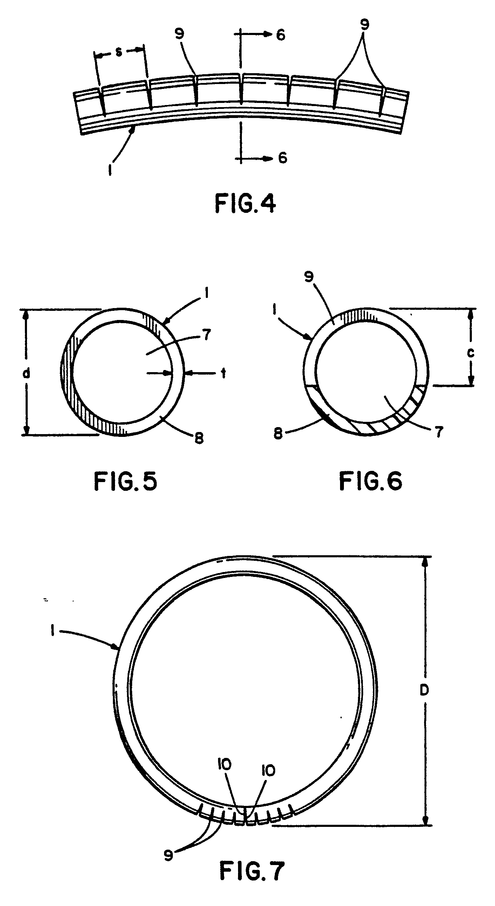

Tyre 2 is carried on a wheel 3 which includes a hub 4 from which spokes 5 extend radially to a rim 6. The tyre insert tube 1 forms a central annular bore 7 (Figures 2, 5) defined by a cylindrical thin wall 8. This central bore functions as a cushioning chamber which, in combination with certain physical characteristics of the material from which the insert tube is constructed, will produce a resistance to deformation similar or identical to that which would be realised if tyre 2 were filled with pressurised air contained within a conventional inner tube.

The insert tube 1 is made from a resilient thermoplastics material. In a preferred mode of construction, 'the tube is produced by continuous extrusion, and upon emerging from the extrusion die it is repeatedly cut at close intervals while the tube is in motion and before the thermoplastics material has fully set and completely cured. The cuts 9 (Figures 1, 3 and 4) are partial cuts through the cross-section of the tube. The depth c and interval s of these cuts are dictated by the performance requirements and certain critical dimensions of a particular application.

In particular, as the ratio of the cross-sectional diameter d (Figure 5) of the insert tube 1 relative to the insert tube hoop diameter D (Figure 3) is increased, the depth of the cuts 9 must be increased and/or the number of cuts 9 for a given length of insert tube 1 must be increased to prevent flattening and or kinking of the insert tube. Similarly, if all other dimensions are maintained and the wall thickness t (Figure 5) is increased, the depth c of the cuts 9 per unit length of insert tube 1 must be increased to prevent kinking of the insert tube.

Similarly, for a given insert tube hoop diameter D and insert tube cross-sectional diameter d, as the wall thickness t is increased then the depth c of the cuts 9 must be increased and/or the number of cuts 9 for a given length of insert tube 1 must be increased to permit forming the tube into a hoop without complicated and expensive thermoforming equipment.

For tyre insert tubes having a relatively large hoop diameter, such as those used on bicycle wheels, the depth of cut c may be less than the cross-sectional radius of the tube. However, for tyre insert tubes having a relatively small hoop diameter, such as those used on wheelchair wheels, the depth of cut c may be greater than the cross-sectional radius of the tube.

The cuts 9 are preferably made as knife cuts during extrusion as the tube emerges from the extrusion die. These knife cuts are characterised by no substantial removal of thermoplastics material and are distinguishable from a saw cut in this regard. As is shown in Figure 4, after the application of a series of cuts 9 to the insert tube 1, the tube assumes a natural curve, which enables the extrusion operator to coil an otherwise long length of extruded tube stock into relatively smaller diameter coils.

Accordingly, less storage space is required for a given length of insert tube fabricated in accordance with this invention. Moreover, a smaller inventory of insert tubes is required because different insert tube hoop diameters can be supplied from a continuous stock of coils. For different tyre diameters, the insert tube 1 can be cut at the appropriate cut 9 (to form a tube end 10) from the coil stock for insertion to the tyre casing 2 (Figure 2).

A variation is shown in Figure 7 in which partial cuts 9 as described above are made only at the portion of the insert tube 1 close to its ends 10, for example within 5 to 10 times of the cross-sectional diameter from each end. This allows simplified insertion of the tube into the tyre casing, and eliminates the need for butt welding the ends to prevent circular discontinuity. This alternative design is really only useful in those applications in which the insert tube parameters are such that kinking does not occur when the cuts are eliminated.

A preferred plastics material that may be used for the preparation of the tube is a chemically extended polyester and polybutylene terephthalate polymer. In general, the mixture will comprise from about 50% to about 90% of the chemically extended polyester and from about 10% to about 50% of the polybutylene terephathalate polymer.

Examples of the chemically extended polyesters which may be used are known and described in, for example, U.S. Patents 3,651,014, 3,766,146 and 3,763,109. In general, the chemically extended polyesters are prepared from mixtures comprising a long-chain glycol, one or more dicarboxylic acids or their esters or ester-forming derivatives, and one or more low molecular weight aliphatic diols. Included among the long-chain gycols are those having a molecular weight of about 400 to about 4,000, and a carbon-to-oxygen ratio in the long-chain glycol in excess of about 2:5. Examples of these glycols include poly (1.2- and l.3-propylene oxide) glycol, poly (tetramethylene oxide) glycol, etc. The dicarboxylic acids utilised in preparing the chemically extended polyesters are those having a molecular weight of less than about 300, and they may be aromatic, aliphatic or cycloaliphatic dicarboxylic acids. Representative dicarboxylic acids include terephthalic and isophthalic acids, dibenzoic acid, etc. Included among the low molecular weight diols used in the preparation of the chemically extended polyesters are acyclic, alicyclic and aromatic dihydroxy compounds. Preferred are diols with 2 to 15 carbon atoms such as ethylene glycol, propylene glycol, tetramethylene glycol, etc.

Copolyesters of these types are available commercially from E.I. du Pont de Nemours Company under the general trade designation "Hytrel". A variety of Hytrel polyester elastomers is available from du Pont and these are contemplated as being useful in the preparation of the tyre insert of the invention. A particularly preferred example of a chemically extended polyester material which can be utilised in this invention is a Hytrel formulation having a Bayshore resilience greater than 50.

Other preferred plastic materials that may be used are the thermoplastic vulcanizates comprising blends of olefin rubber and thermoplastic olefin resin as described in U.S. Patent 4,130,535. These thermoplastic compositions are sold by the Monsanto Company under the trade designation Santoprene.

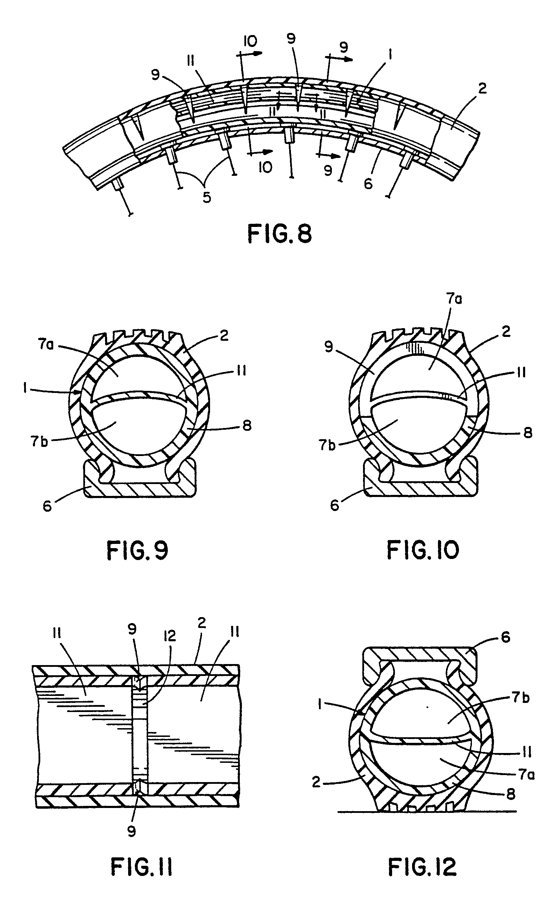

Figures 8 to 12 show a preferred embodiment in accordance with the invention. This embodiment is structurally the same as the first embodiment described with reference to Figures 1 to 6, except that an arched reinforcing web 11 is disposed within the interior bore 7 of tube 1 to subdivide the bore into approximately equal upper and lower bore sections 7a and 7b. The web 11 extends for the entire length of insert tube 1 to limit the extent of flattening of the insert tube during extreme conditions.

The web 11 is made of the same thermoplastics material as the tube 1, and because the web 11 and tube 1 are formed in the same thermoplastic extrusion step, the web 11 is molecularly bonded to the interior sidewalls of the tube 1 so as to have a permanent attachment to diametrically opposed longitudinal areas of the interior sidewalls.

As is shown in Figures 8, 10 and 11, the partial cuts 9 extend through reinforcing web 11 so that the web is subdivided into generally rectangular sections each having a length equal to the spacing s (Figure 4). Accordingly, a gap 12 (Figure 11) defined by the partial cut 9 appears between adjacent sections of reinforcing web 11.

In order to provide a relatively cushioned ride, and yet prevent over-stressing the sidewalls of the tube 1 upon deformation, the web 11 is formed with a predetermined curvature or "arch". This permits the tube 1 to deform at a low load and so provide a softer ride. However, when the load causes the tube 1 to assume an elliptical shape (Figure 12) due to increased weight or severe impact, the web 11 is placed in tension due to a flattening of the web arch (Figure 12). This load may be predetermined by the designer. For the heavier loads which cause a flattened web, the load is shared by web 11 and the tube sidewalls in such a fashion that the ride becomes very hard, and the tube can withstand heavy shock or static loads without permanent deformation.

The arched reinforcing web 11 is thus advantageously included in the structure of the tube 1 in those situations in which the tyre 2 is used in an environment having wide temperature variations, wide ranges of applied weight, or extremely rough terrain which subjects the tyre to momentarily intense forces. In these cases if the web is not present the extreme conditions will cause excessive flattening or an excessive out-of-round condition of the tube which detracts from its overall riding performance.

Although it is preferable to fabricate the tube 1 with the partial cuts 9 which penetrate into the reinforcing web 11 to form the series of gaps 12, such gaps are not necessary under conditions of moderate weight, moderate applied forces, or limited high temperatures. Additionally, in those situations in which the tyre insert diameter D is relatively large, it may not be necessary to penetrate into the reinforcing web 11 to form the gaps 12.

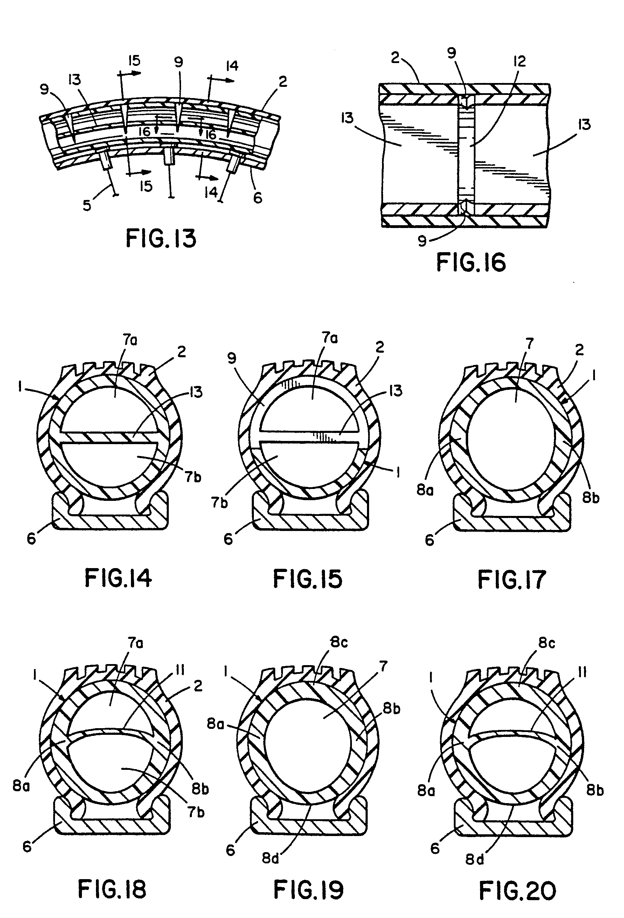

Figures 13 to 16 show a variation of the embodiment shown in Figures 8 to 12. This embodiment is structurally the same as the embodiment described with reference to Figures 8 to 12, except that the reinforcing web 13 is "flat".

In certain applications, it is desirable to form the reinforcing web 13 with a flat cross-section at no load (arch eliminated) so that the web is in tension even under light weights. This flat-web design is particularly useful in applications having relatively large insert tube diameters d (Figure 5) which would otherwise tend to flatten easily. Because of the relatively large insert tube diameter, adequate cushioning may be obtained by flexing the outer portions of the tube sidewall adjacent the road. Because the flat web 13 goes into tension upon application of the slightest tyre load, the tyre is prevented from assuming an excessive out-of-round condition.

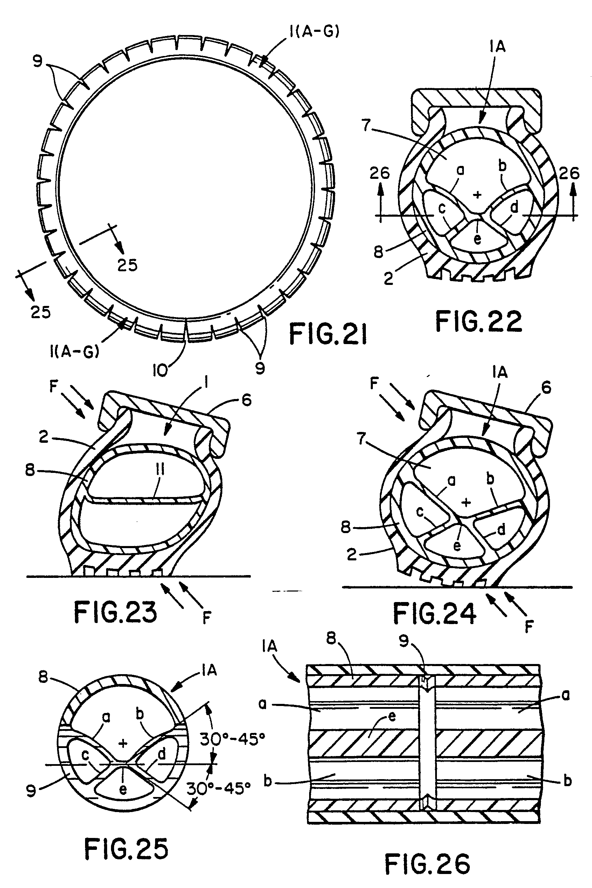

Figures 17 to 20 show two different variations of the invention involving modifications in the tube wall 8 thickness t (Figure 5). These wall modifications are applicable to insert tubes fabricated with reinforcing webs which are either arched or flat and also to the insert tubes I(A-G) (Figures 22, 24, 27-38), to be described below. The web has been omitted from Figures 17 and 19 for reasons of clarity.

In Figures 17 and 18, the tube sidewall 8 is made relatively thicker in those vertical areas 8a and 8b of the sidewall which carry the highest stress under load. The effect of the wall nonuniformity is to create a spring-like load-deflection curve approximating that of a variable-rate spring. This results in a soft ride at low loads, and a harsher ride at high loads or impact loads, while preventing the tube 1 from becoming permanently deformed from excessive stress.

In Figures 19 and 20, the inner and outer wall thicknesses at 8c and 8d of the insert tube are different. A preferred modification is to make the road contacting wall at 8c thicker than the opposite or bottom wall at 8d. Two purposes may be achieved with this embodiment. Firstly, a significant saving of material may be achieved. Secondly, the ride characteristics may be tailored to suit the objectives of the designer; that is, the outer wall thickness in contact with the road surface will react to loads at one rate, and the inner wall thickness supported by the tyre beads will react at a different rate.

Figures 21 to 32 serve to illustrate a second embodiment of the insert tube 1(A-G) which includes a reinforcing cross web within the bore 7 to strengthen the tube.

As in the earlier embodiments, an appropriate length of the insert tube 1(A-G) is formed into a single coil for insertion into tyre 2. The insert tube 1(A-G) is fabricated from a resilient thermoplastics material as was the case with the insert tube 1.

However, the tyre insert tube 1(A-G) contains a central bore 7 which is subdivided by the X-shaped and modified X-shaped reinforcing webs shown in Figures 22 and 24 to 32. The reinforcing webs are particularly designed to strengthen the insert tube 1(A-G) in response to intense angularly applied forces on the tyre 2 (for example, during a turning manoeuvre on a sharp corner) or to prevent excessive flattening in response to heavy load weights.

In a preferred mode of construction, the insert tube 1 (A-G) is produced by continuous extrusion, and upon emerging from the extrusion die it is repeatedly cut at close intervals to form the partial cuts 9 while the tube is emerging from the die and before the thermoplastics material has fully set and completely cured. The cuts 9 are again partial cuts through the wall 8 to enable the insert tube to be curved into a single coil as shown in Figure 21 without kinking. The ends of the single tube coil meet at 10.

A tyre insert tube with partial cuts but no web might be satisfactory for vehicles carrying light loads and in which the tyres are not subject to intense angularly applied forces. The inclusion of the single reinforcing web enables the vehicle to carry heavier loads with an improvement in the ability of the insert tube to withstand angularly applied loads. However, with the combination of a heavy load accompanied by repeated and intense, angularly-applied forces, such an insert tube may be subject to a partial collapse in the sense that the tyre insert tube assumes an excessively out-of-round or a generally inclined-elliptical shape (Figure 23). In some instances the tyre insert tube may lose its ability to return to its generally circular cross section.

In Figure 23, angularly applied forces F are strong enough to force the upper section of the tube wall above the reinforcing web 11 excessively to the right, and the lower section of the tube wall 8 below the reinforcing web 11 excessively to the left. This phenomenon occurs most frequently when the tube wall 8 is relatively thin and the cross-sectional diameter of the tube is relatively large with respect to the intensity of forces F. Reinforcing web 11 is placed in tension and as such, restrains and supports the vertical sidewalls but is unable to prevent excessive side displacement of the generally semi-circular sections of the tube wall 8 located both above and below reinforcing web 11.

Thus in the tube designs of the second embodiment of this invention an X-shaped or modified X-shaped reinforcing web having two intersecting cross legs is substituted for the single web 11 shown in Figure 23. Four variations of the second embodiment of reinforcing web structure are shown. In the first variation of the second embodiment (Figures 22 and 24), a modified X-shaped reinforcing web is shown in which sidewall attached web segments a, b, c, d are joined together by a centre link e within the insert tube 1A.

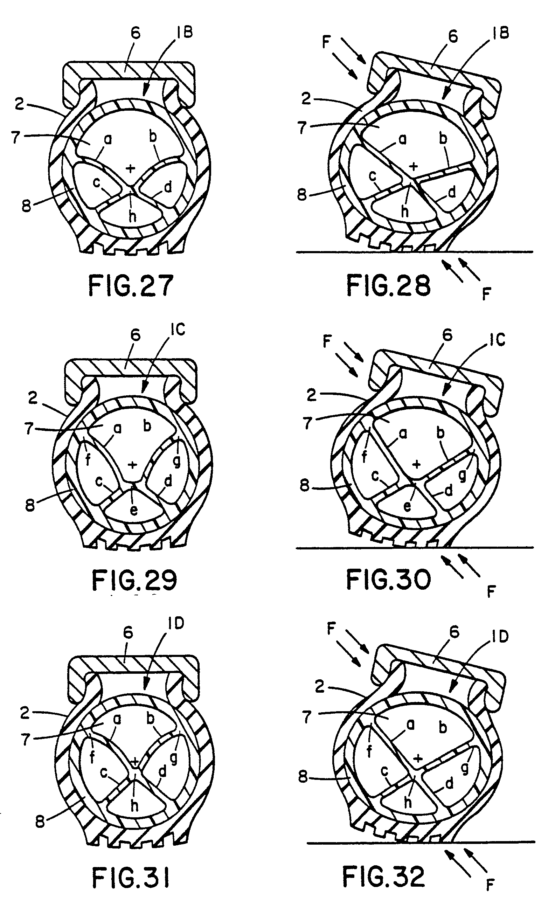

In the second variation of the second embodiment (Figures 27 and 28) an X-shaped reinforcing web is shown in which the sidewall web segments a, b, c, d are joined directly together without the inclusion of a centre link within the insert tube 1B.

In the third variation of the second embodiment (Figures 29 and 30) a modified X-shaped reinforcing web is shown in which the sidewall attached segments a, b, c, d are joined together by a centre link e within the insert tube IC. The reinforcing web of the third variation differs from that of the first and second variations in that the attachment points f and g of the web segments a and b, respectively, are substantially elevated and are located closer to the rim 6.

In the fourth variation of the second embodiment (Figures 31 and 32) an X-shaped reinforcing web is shown in which the sidewall attached web segments a, b, c, d are joined directly together within the insert tube 1D and without the inclusion of a centre link. The fourth variation is similar to the third. variation in that the attachment points f and g of the web segments a and b, respectively, are substantially elevated and occur closer to the rim 6 than that of the first and second species. The attachment span length between the web segments a. and c and also between the segments b and d is relatively increased.

In response to a vertically applied load, both the cross legs of the X-shaped or modified X-shaped reinforcing web of all four variations of the second embodiment are placed in tension. In particular with respect to the first and third variations, the cross leg comprising web segments a, e, d and the cross leg comprising web segments b, e, c are placed in tension; and with respect to the second and fourth variations, the cross leg comprising web segments a, d and the cross leg comprising web segments b, c are placed in tension.

With both cross legs in tension, the reinforcing web structure places a limit on the deformation or flattening of tyre insert tube 1(A-D). The inclusion of the centre link e in the cross legs of the variation of Figures 22, 24 and the variation of Figures 29, 30 provides a somewhat softer ride when compared to that of the variation of Figures 27, 28 and the variation of Figures 31, 32 in which a centre link has not been included. All other design criteria being the same, cross legs having a centre link permit their associated tube wall to flatten to a greater extent than do cross legs omitting a centre link before the reinforcing web is placed into tension.

The web segments a and b of all variations of the second embodiment are shown formed with an optional slight curvature in the unloaded (no-tension) state. This curvature requires a relatively greater vertical load before the cross legs are placed in tension. As such, the curvature of the web segments a and b provides a somewhat softer ride.

While the web segments c and d are shown straight or flat for all variations of the second embodiment, these web segments can also be formed with a slight curvature to provide a softer ride.

In the main, however, an adequately soft ride can be attained by forming the web segments a and b only with a curvature. Because excessive deformation tends to occur first in the wall 8 defining the lower semi-circle containing the partial cuts 9, and secondly, in the upper semi-circle adjacent the rim 6, it is generally desirable to have the web segments c and d go into tension before the web segments a and b in response to vertically applied loads. The tensioned web segments c and d preferably reinforce the lower semi-circle of the insert tube wall 8 first because the upper semi-circle of the insert tube wall 8 has no partial cuts 9 and also because the upper semi-circle is also reinforced by the channel sides of the rim 6.

In general, the centre link e of the first and third variations of the second embodiment and the intersection point h of variations 2 and 4 of the second embodiment are preferably located somewhat below the centre of the circular bore 7. This positioning facilitates placing the lower semi-circle of the insert tube wall 8 into tension first.

When the four variations of the second embodiment are subjected to angularly applied forces F as shown in Figures 24, 28, 30 and 32, the cross webs b, c in Figures 28 and 32 and the cross webs b, e, c in Figures 24 and 30 are placed in tension. In each case, the associated intersecting cross web a, d or a, e, d is not generally placed in tension. The tensioning of the single cross web, however, prevents the insert tube wall 8 from going into a distorted inclined elliptical shape similar to that shown in Figure 23 when the insert tube 1 (A-D) is subjected to angularly applied forces.

In the event the angularly applied force is at a 90 degree angle to that of the forces F, the tyre 2 will incline in the opposite direction, and the previously untensioned cross web will be placed into tension, namely b, c or b, e, c to prevent the insert tube wall 8 from going into a distorted inclined elliptical shape.

Although the main tendency is for the lower semi-circle to distort before the upper semi-circle, in the case of insert tubes having relatively large diameters, the tendency for the upper semi-circle of the tube adjacent the rim 6 to distort can be reduced by elevating the web attachment points for the web segments a and b to points f and g (Figures 29-32) which are relatively closer to rim 6 than the corresponding attachment points for the web segments a and b of the first and second variations shown in Figures 22, 24, 27 and 28. The elevated attachment points f and g reinforce the upper semi-circle of the tyre insert tube somewhat more than the lower attachment points.

In general, optimum design angles for the web segments a, b, c, d relative a horizontal line passing through the point of intersection h of the cross webs (or segment e) are in the range of 30 to 45 degrees.

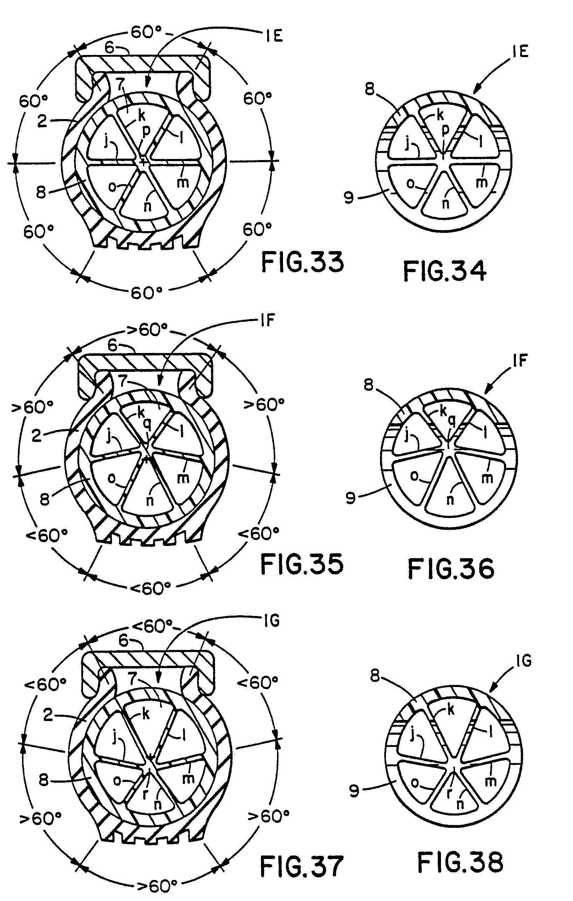

Figures 33 to 38 show a third embodiment of tube designs I(E-G) in which a reinforcing web having three intersecting cross legs is employed.

The insert tube 1E (Figures 33, 34) has a reinforcing web in which sidewall attached web segments j, k, 1, m, n and o are joined together at an intersection point p. The point p is located on the central axis of the cylindrical tube wall 8. The attached web segments extend radially outwards from the intersection point p to divide the tube bore 7 into six equal sectors. Accordingly, each sidewall attached web segment forms a 60 degree angle with its adjacent segments.

In the variant shown in Figure 34, the partial cut 9 does not extend through the entire cross section for web segments k and 1. This partial cut is to be distinguished from the partial cut 9 shown in Figure 25 applicable to the insert tube 1(A-D). In the insert tube 1(E-G), since the points of attachment of segments k and 1 are substantially elevated and closer to the inner periphery of the tube wall 8 than the attachment for the web segments a and b in the insert tubes 1(A-D), it is desirable that the uncut portion of the tube wall 8 be left relatively large so as not to unduly weaken the sidewall 8 in the area of the rim 6. This dictates that part of the webs k and 1 should not be cut.

Because the sidewall attached web segments j, k, l, m, n and o define 60 degree sectors from the point p, the insert tube 1E tends to be substantially stronger than the insert tubes 1(A-D). In response to heavy vertical loads, each of the three cross legs comprising j, m; k, n; and l, o is placed into tension. This web reinforcing arrangement enables the insert tube 1E to resist deformation better than the designs 1(A-D). However, this improved resistance to deformation is not without some loss in the softness of the ride, and so the insert tube 1E provides a somewhat firmer and harder ride than the designs of insert tube designated 1(A-D). This compromise of softness for increased web reinforcing strength is necessary in those extremely rigorous applications in which the insert tube is used on relatively large vehicles carrying heavy weights. The insert-tube 1E is also better able to withstand angularly applied forces.

The insert tube 1F is a variation on the structure of the insert tube 1E. The intersection point q is elevated above the geometrical centre point for the circular cylinder defined by the insert tube wall 8. The elevation of the intersection point q, while maintaining the web attachment points for segments j and m on the horizontal diameter, enlarges the sector angles defined by the segments j, k, 1 and m for the inner or upper semi-circle adjacent the rim to greater than 60 degrees. This weakens the resistance to deformation of the rim half of insert tube 8. However, the sector angles defined by segments m, n, o and j for the lower or ground half of the insert tube 1F are made less than 60 degrees, and this strengthens the resistance to deformation of the ground half of the insert tube 1F. The insert tube 1F is advantageously employed in those applications in which greater strength is required of the lower half of the insert tube adjacent the ground, while less strength, due to reinforcement by rim 9, is required of the upper half.

As is shown in Figure 36, the partial cut 9 employed in the insert tube 1F does not extend through the entire cross section for web segments k and l for reasons similar to those discussed with respect to Figure 34 as they apply to the insert tube 1E.

Insert tube 1G shown in Figures 37 and 38 shows another variation on the reinforcing web structure of the third embodiment. In this variation, the cross-leg intersection point r is located below the geometrical centre for insert tube wall 8. With this disposition of the intersection point r, the inner or upper sector angles defined by the web segments j, k, l and m are less than 60 degrees, whereas the lower sectors defined by the segments m, n, o and j are greater than 60 degrees. This results in the upper half of the insert tube 1G being strengthened at the expense of the lower half. This may be desirable in those applications which require that the lower half of insert tube 8 be relatively stronger than the upper half.

In Figure 38 the depth of the partial cut 9 through the segments k and l of the insert tube IG is similar to that previously shown and discussed with respect to Figures 34 and 36.

In all of the variations 1(A-G), the spacing of successive partial cuts 9 is preferably less than the diameter of the insert tube wall 8. Satisfactory performance has been obtained with a spacing approximately equal to the radius of the circle defined by wall 8.

**Claims**

1. An non-pneumatic insert tube for a tyre (2) comprising an elongate tube (1) the wall of which defines a bore (7) which extends along the length of the tube, the wall of the tube (1) having a sequence of partial cuts (9), the sequence of partial cuts (9) being disposed about the outer periphery of the tube when formed into a single coil hoop for insertion into a tyre and with the portion of the tube uncut by the sequence of outer partial cuts being located on the inner periphery of the tube, and with at least a portion of the tube wall disposed between adjacent outer partial cuts in the sequence being continuous about the circumference of the tube, characterised by a reinforcing web (11) which is thin relative to the wall thickness of the tube disposed within the bore of the tube and integrally attached to the interior sidewalls (8) of the tube to subdivide the bore into sections (7a, 7b).

2. A tube as claimed in Claim 1 characterised in that the bore is continuously open for its entire length.

3. A tube as claimed in Claim 1 or Claim 2, characterised in that the partial cuts (9) extend into the reinforcing web (11) to subdivide the web into separate sections.

4. A tube as claimed in any preceding claim,

characterised in that the reinforcing web (11) is arched.

5. A tube as claimed in any preceding claim, characterised in that the reinforcing web has two or more intersecting cross legs (a,d; b,c; j,m; k,n; l,o) disposed within the bore (7) of the tube and integrally joined to the interior wall (8) of the tube.

6. A tube as claimed in Claim 5 characterised in that the cross legs of the reinforcing web are disposed in an x-shaped, cross-sectional configuration.

7. A tube as claimed in Claim 5 or Claim 6, characterised in that a portion of one or more of the cross legs is formed with a cross-sectional curvature in the untensioned state.

8. A tube as claimed in any preceding claim, characterised in that the sidewall portions of the tube are relatively thicker than the inner and outer peripheries.

9. A tube as claimed in any preceding claim characterised in that the sequence of partial cuts are generally symmetrically centred about the outer periphery of the tube (1) when formed into a single coil hoop.

10. A tube as claimed in any preceding claim, characterised by an uncut portion of the tube at the inner periphery of the tube (1) which is to be seated adjacent the rim (6).

## Patentansprüche

1. Schlauch mit Volleinlage für einen Reifen (2) mit einem langgestreckten Schlauch (1), dessen Mantel eine Bohrung (7) definiert, die sich in Längsrichtung des Schlauchs erstreckt, wobei der Mantel des Schlauchs (1) mehrere Teileinschnitte (9) aufweist, die an dem Außenumfang des Schlauchs angeordnet sind, wenn er zum Einsatz in einen Reifen als Ring mit einer einzigen Windung ausgeformt ist, und wobei der Teil des Schlauchs, an dem die äußeren Teileinschitte nicht eingeschnitten sind, auf dem Innenumfang des Schlauchs angeordnet ist, und wobei zumindest ein Abschnitt des Schlauchmantels, der zwischen benachbarten äußeren Teileinschnitten in der Reihe angeordnet ist, auf dem Umfang des Schlauchs durchgehend ist, gekennzeichnet durch einen Verstärkungskern (11), der dünn ist relativ zur Manteldicke des Schlauchs und innerhalb der Bohrung des Schlauchs angeordnet und an den inneren Seitenwänden (8) des Schlauchs einstückig befestigt ist, um die Bohrung in Abschnitte (7a, 7b) zu unterteilen.

2. Schlauch nach Anspruch 1, dadurch gekennzeichnet, daß die Bohrung über ihre gesamte Länge durchgehend offen ist.

3. Schlauch nach Anspruch 1 oder 2, dadurch gekennzeichnet, daß die Teileinschitte (9) sich in den Verstärkungskern (11) erstrecken, um diesen in einzelne Abschitte zu unterteilen.

4. Schlauch nach einem der vorstehenden Ansprüche, dadurch gekennzeichnet, daß der Verstärkungskern (11) gebogen ist.

5. Schlauch nach einem der vorstehenden Ansprüche, dadurch gekennzeichnet, daß der Verstärkungskern zwei oder mehr sich schneidende kreuzbeine (a, d; b, c; j, m; k, n; l, o) aufweist, die innerhalb der Bohrung (7) des Schlauchs angeordnet und mit der Innenwand (8) des Schlauchs einstückig verbunden sind.

6. Schlauch nach Anspruch 5, dadurch gekennzeichnet, daß die Kreuzbeine des Verstärkungskerns eine x-förmige Querschnittsanordnung aufweisen.

7. Schlauch nach Anspruch 5 oder 6, dadurch gekennzeichnet, daß ein Abschnitt eines oder mehrerer Kreuzbeine im Querschnitt einen Bogen im ungespannten Zustand aufweist.

8. Schlauch nach einem der vorstehenden Ansprüche, dadurch gekennzeichnet, daß die Seitenwandabschnitte des Schlauchs relativ dikker sind als die inneren und äußeren Umfangsteile.

9. Schlauch nach einem der vorstehenden Ansprüche, dadurch gekennzeichnet, daß die Folgen der Teileinschnitte im wesentlichen symmetrisch um den äußeren Umfang des Schlauchs (1) zentriert sind, wenn dieser eine einzelne Windung aufweist.

10. Schlauch nach einem der vorstehenden Ansprüche, gekennzeichnet durch einen nicht eingeschnittenen Abschnitt des Schlauchs am inneren Umfang des Schlauchs (1), der zur Felge (6) benachbart angeordnet ist.

## Revendications

1. Elément tubulaire interne non gonflable pour pneu (2), comprenant un long élément tubulaire (1) dont la paroi délimite un passage (7) qui s'étend tout au long de l'élément tubulaire, la paroi de l'élément tubulaire (1) présentant une série de coupures partielles (9), la série des coupures partielles (9) étant prévue suivant la périphérie extérieure de l'élément tubulaire lorsque ce dernier est transformé en une forme circulaire à enroulement unique en vue de l'introduction dans un pneu, la partie de l'élément tubulaire, qui n'est pas coupée par la série des coupures partielles extérieures étant localisée à la périphérie interne de cet élément tubulaire, au moins une partie de la paroi de l'élément tubulaire, disposée entre les coupures partielles extérieures adjacentes de la série susdite étant continue tout autour de la circonférence de l'élément tubulaire, caractérisé en ce qu'il comporte un voile de renforcement (11) qui est mince par rapport à l'épaisseur de paroi de l'élément tubulaire et qui est prévu à l'intérieur du passage de cet élément tubulaire et est attaché pour ne former qu'une pièce avec les parois latérales intérieures (8) de l'élément tubulaire afin de subdiviser ce passage en sections (7a, 7b).

2. Elément tubulaire suivant la revendication 1, caractérisé en ce que le passage est ouvert de façon continue sur la totalité de sa longueur.

3. Elément tubulaire suivant la revendication 1 ou la revendication 2, caractérisé en ce que les coupures partielles (9) s'étendent dans le voile de renforcement (11) pour subdiviser ce voile en sections séparées.

4. Elément tubulaire suivant l'une quelconque des revendications précédentes, caractérisé en ce que le voile de renforcement (11) est arqué.

5. Elément tubulaire suivant l'une quelconque des revendications précédentes, caractérisé en ce que le voile de renforcement comporte des branches transversales qui se recoupent, au nombre de deux ou plus (a, d; b, c; j, m; k, n; l, o) prévues dans le passage (7) de l'élement tubulaire et réunies solidairement à la paroi interne (8) de cet élément tubulaire.

6. Elément tubulaire suivant la revendication 5, caractérisé en ce que les branches transversales du voile de renforcement sont disposées suivant une configuration transversale en forme de X.

7. Elément tubulaire suivant la revendication 5 ou la revendication 6, caractérisé en ce qu'une partie d'une ou plusieurs des branches transversales présente une courbure en coupe dans l'état sans tension.

8. Elément tubulaire suivant l'une quelconque des revendications précédentes, caractérisé en ce que les portions de paroi latérale de l'élément tubulaire sont relativement plus épaisses que les périphéries interne et externe.

9. Elément tubulaire suivant l'une quelconque des revendications précédentes, caractérisé en ce que la série des coupures partielles sont centrées symétriquement, d'une façon générale, par rapport à la périphérie externe de l'élément tubulaire (1) lorsque celui-ci est conformé à une forme circulaire à enroulement unique.

10. Elément tubulaire suivant l'une quelconque des revendications précédentes, caractérisé en ce qu'il présente une partie non découpée à la périphérie interne de cet élément tubulaire (1), qui est destinée à s'appuyer contre la jante (6).

FIG.1

FIG.2

FIG.3

FIG.4

FIG.5

FIG.6

FIG.7

EP 0 104 797 B1

FIG. 8

FIG. 9

FIG. 10

FIG. 11

FIG. 12

3

FIG.13

FIG.16

FIG.14

FIG.15

FIG.17

FIG.18

FIG.19

FIG.20

FIG.21

FIG.22

FIG.23

FIG.24

FIG.25

FIG.26

5

FIG.27

FIG.28

FIG.29

FIG.30

FIG.31

FIG.32

**FIG.33**

**FIG.34**

**FIG.35**

**FIG.36**

**FIG.37**

**FIG.38**